# EUROPÄISCHE PATENTSCHRIFT

(11) **EP 2 736 744 B1**
(45) Veröffentlichungstag und Bekanntmachung des Hinweises auf die Patenterteilung: **04.04.2018**
(21) Anmeldenummer: 12746006.1
(22) Anmeldetag: 26.07.2012
(51) Int. Cl.: B60J 10/242

(54) **DICHTUNGSSTRANG, INSBESONDERE ZUR ABDICHTUNG EINER TÜREINFASSUNG GEGEN EINE FAHRZEUGTÜR**
GASKET STRING, IN PARTICULAR FOR SEALING A DOOR JAMB AGAINST A VEHICLE DOOR
CORDON D'ÉTANCHÉITÉ, DESTINÉ EN PARTICULIER À ÉTANCHÉIFIER UN ENCADREMENT DE PORTE PAR RAPPORT À UNE PORTE DE VÉHICULE

(30) Priorität: 28.07.2011 DE 102011052232
(43) Veröffentlichungstag der Anmeldung: 04.06.2014
(73) Patentinhaber: CQLT SaarGummi Technologies S.à.r.l., 5544 Remich (LU)
(72) Erfinder: KAST, Christian, 66683 Merzig-Brotdorf (DE); DILLMANN, Martin, 66809 Nalbach (DE)
(74) Vertreter: Patentanwälte Bernhardt / Wolff Partnerschaft mbB
(86) Internationale Anmeldenummer: PCT/DE2012/100226
(87) Internationale Veröffentlichungsnummer: WO 2013/013672

(56) Entgegenhaltungen:
- EP-A1- 0 201 223
- DE-B4-102005 018 906
- DE-U1- 20 117 679
- DE-U1-202005 004 006
- FR-A1- 2 519 399
- GB-A- 2 266 742
- US-A1- 2004 145 213

## Beschreibung

Die Erfindung betrifft einen Dichtungsstrang, insbesondere zur Abdichtung einer Türeinfassung gegen eine Fahrzeugtür, mit einem aus einem ersten Elastomermaterial bestehenden Befestigungsabschnitt, der mit einem aus einem zweiten, gegenüber dem ersten weicheren, Elastomermaterial bestehenden Abschnitt einen Dichtungsschlauch bildet, dessen Schlauchwand zueinander in Stranglängsrichtung im Abstand angeordnete Öffnungen aufweist, wobei alle diese Öffnungen in Einbaulage verdeckt bei einer in Umfangsrichtung gebildeten Abwinklung der Schlauchwand in einem an den Befestigungsabschnitt angrenzenden Umfangsabschnitt des Dichtungsschlauches angeordnet sind.

Ein solcher Dichtungsstrang ist aus der DE 20 2005 004 006 U1 bekannt. Er besteht aus einem U-förmigen, mittels einer Armierung verstärkten Befestigungsabschnitt, an den eine Dichtlippe angebracht ist, und einem auf der der Dichtlippe abgewandten Seite angeordneten Dichtungsabschnitt. Der Befestigungsabschnitt, welcher zur Befestigung des Dichtungsstrangs auf einer Fahrzeugkarosserie vorgesehen ist, besteht aus einem festeren Material, z.B. EDPM, wohingegen der Dichtungsstrang, auf welchen eine abzudichtende Fahrzeugtür aufliegt, aus einem weicheren Material, z.B. Moosgummi, gebildet ist. In dem aus dem weichen Material gebildeten Dichtungsabschnitt sind Öffnungen vorgesehen, die die Ansammlung von Kondensat im Innern des Dichtungsstrangs, welches bei wechselnder Temperaturbeaufschlagung innerhalb des Dichtungsabschnitts gebildet wird, abführt.

Ein weiterer, in Fig. 1 dargestellter Dichtungsstrang ist aus der DE 10 2005 018 906 B4 bekannt. Die der Entlüftung und ggf. Entwässerung dienenden Öffnungen im Dichtungsschlauch sind durch mechanische Bearbeitung oder Laserbohren eines durch weicheres Elastomermaterial gebildeten Schlauchwandabschnitts hergestellt. Die Herstellung der Öffnungen durch mechanische Bearbeitung erfordert einen hohen Aufwand, vor allem dann, wenn die Öffnungen während kontinuierlicher Fertigung des Dichtungsstrangs so präzise hergestellt werden sollen, dass sie das Aussehen des Dichtungsstrangs nicht beeinträchtigen. Soll zudem sichergestellt werden, dass sich keine Partikel, welche bei einem Bohrprozess entstehen können, in der Hohlkammer des Dichtungsquerschnittes ansammeln, erhöht sich der Aufwand nochmals.

Wird das o.a. Laserbohrverfahren zur Herstellung der Entlüftungsöffnungen eingesetzt, so wird vorteilhaft weitgehend verhindert, dass sich Partikel in der Hohlkammer absetzen. Sehr nachteilig verschmutzen beim Laserbohrprozess entstehende Rückstände aber oftmals stark die Profiloberfläche.

Aus der EP 0 201 223 A1 ist ein Dichtungsstrang bekannt, welcher aus einem Befestigungsabschnitt mit einem Dichtungsabschnitt besteht, wobei in einer Schlauchwand des Dichtungsstrangs in Stranglängsrichtung im Abstand angeordnete Öffnungen gebildet sind, von denen im Querschnitt zwei Öffnungen in einem Dichtungsabschnitt gebildet sind, wohingegen eine dritte Öffnung im Querschnitt in dem Befestigungsabschnitt gebildet ist.

Der Erfindung liegt die Aufgabe zugrunde, die Herstellung des Dichtungsstrangs mittels weiterer Herstellungsverfahren zu ermöglichen.

Der diese Aufgabe lösende Dichtungsstrang nach der Erfindung ist dadurch gekennzeichnet, dass der die Öffnungen aufweisende Umfangsabschnitt des Dichtungsschlauches aus dem ersten, den Befestigungsabschnitt bildenden Elastomermaterial besteht.

Vorteilhaft erlaubt dieses festere Elastomermaterial eine Herstellung der Öffnungen durch Materialverdrängung oder -abführung, wie dies in der DE 10 2005 018 906 B4 des Anmelders beschrieben ist. Im Schlauchinnenraum können sich keine Partikel ansammeln. Der so hergestellte Dichtungsstrang eignet sich daher besonders zur Herstellung überdurchschnittlich langer Dichtungsprofile, welche üblicherweise auf ein Rolle gewickelt sind und mittels Rollapplikation verarbeitet werden.

Die eingangs genannte Abwinklung bietet vorteilhaft einen in der Einbaulage des Dichtungsstrangs die gebildeten Öffnungen verdeckenden Sichtschutz, der es gestattet, die Öffnungen mit geringerer Präzision als nach dem Stand der Technik herzustellen.

In einer bevorzugten Ausführungsform sind die Öffnungen hinter einer die Abwinklung umfassenden Abstufung der Schlauchwand, insbesondere am Fuß der Abstufung, angeordnet.

Vorteilhaft können die Öffnungen in einer zwei Abstufungen und Abwinklungen aufweisenden Einbuchtung der Schlauchwand des Dichtungsschlauches angeordnet sein, wobei vorzugsweise die offene Seite der Einbuchtung zur Anordnung gegenüber einem Karosserieabschnitt der Türeinfassung vorgesehen ist. Die Abdeckung der Einbuchtung durch den Karosserieabschnitt bietet zusätzlichen Sichtschutz.

Vorzugsweise ist der Dichtungsstrang zur Anbringung an der Türeinfassung für die Fahrzeugtür vorgesehen, so dass ihm zusätzlich eine Kantenschutzfunktion zukommt. Er könnte auch umgekehrt mit der Fahrzeugtür verbunden sein.

In einer weiteren bevorzugten Ausführungsform sind die Öffnungen bei einer Grenzfläche zwischen dem ersten und zweiten Elastomermaterial in dem durch das erste Elastomermaterial gebildeten Grenzbereich angeordnet.

Zweckmäßig ist die Schlauchwanddicke in dem die Öffnungen aufweisenden Umfangsabschnitt des Dichtungsschlauches gegenüber den angrenzenden Abschnitten verringert. Dies erleichtert die Herstellung der Öffnungen, insbesondere nach dem oben genannten Verfahren durch Materialverdrängung oder Abführung.

In einer Ausführungsform der Erfindung weist der Befestigungsabschnitt einen mit einem Karosserieflansch zu verbindenden Befestigungsschenkel auf, der einen Abschnitt der Schlauchwand des Dichtungsschlauches bildet.

Vorzugsweise sind die Öffnungen in einer Endabwinklung an dem Befestigungsschenkel an dessen dem freien Ende des Karosserieflansches fernen Ende gebildet.

Die Erfindung wird nachfolgend anhand eines Ausführungsbeispiels und der beiliegenden, sich auf dieses Ausführungsbeispiel beziehenden Zeichnungen weiter erläutert. Es zeigen:
- Fig. 1: einen Dichtungsstrang nach dem Stand der Technik zum Abdichten einer Türeinfassung gegen eine Fahrzeugtür im Querschnitt,
- Fig. 2: einen erfindungsgemäßen Dichtungsstrang zum Abdichten einer Türeinfassung gegen eine Fahrzeugtür im Querschnitt,
- Fig. 3: eine Detailansicht des Dichtungsstrangs von Fig. 2, und
- Fig. 4 bis 6: weitere Ausführungsbeispiele für einen erfindungsgemäßen Dichtungsstrang.

Ein zur Verklebung mit einem Karosserieflansch 1 vorgesehener Dichtungsstrang weist einen Befestigungsabschnitt 2 auf, der aus einem ersten Elastomermaterial besteht, z.B. EPDM. Der Befestigungsabschnitt 2 umfasst einen Befestigungsschenkel 3, an dem ein doppelt klebendes Klebeband 4 für die Verbindung mit dem Karosserieflansch 1 angebracht ist. Von einem Ende des Befestigungsschenkels 3 erstreckt sich eine die Endstirnfläche des Karosserieflansches 1 übergreifende Lippe 5, die dekorativ den Rand einer Fahrzeuginnenverkleidung überlappen kann. Abweichend von dem gezeigten Beispiel könnte der Dichtungsstrang auch einen U-förmigen Befestigungsabschnitt zum Aufstecken auf den Karosserieflansch aufweisen.

Der Befestigungsschenkel 3 bildet zusammen mit einem weiteren Abschnitt 6, der aus einem zweiten, gegenüber dem ersten Elastomermaterial weicheren Elastomermaterial besteht, z.B. Moosgummi, einen Dichtungsschlauch 7. Die Schlauchwand durchquerende Grenzflächen zwischen den verschiedenen Elastormermaterialien sind mit 8 und 9 bezeichnet. Bei 10 weist die Schlauchwand in Stranglängsrichtung im Abstand zueinander angeordnete Öffnungen zur Entlüftung und ggf. Entwässerung auf.

Das Einbringen der Entlüftungsöffnungen in das weichere zweite Elastomermaterial kontinuierlich durch mechanische Bearbeitung des Dichtungsstrangs unter Koextrusion der verschiedenen Elastomermaterialien erfordert einen hohen und zudem mit den Eingangs erwähnten Nachteilen verbundenen Aufwand.

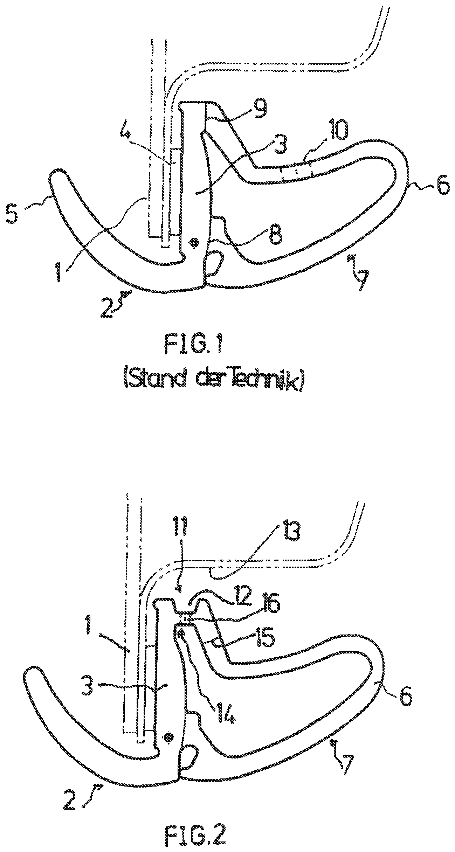

Ein in Fig. 2 gezeigter Dichtungsstrang unterscheidet sich von dem Dichtungsstrang nach Fig. 1 dadurch, dass sich an den Befestigungsschenkel 3 des Befestigungsabschnitts 2 eine Endabwinklung 11 anschließt, die wie der Befestigungsschenkel 3 bis zu einer Grenzfläche 15 aus dem ersten, härteren Elastomermaterial besteht und wie der Befestigungsschenkel 3 einen weiteren Umfangsabschnitt des Dichtungsschlauches 7 bildet.

Die Endabwinklung 11 weist eine Einbuchtung 12 auf, deren offene Seite einem von dem Karosserieflansch 1 wegführenden Karosserieabschnitt 13 gegenüberliegt. Durch die Einbuchtung 12 ist neben Abstufungen in der Schlauchwand ein in seiner Dicke verringerter Schlauchwandabschnitt 14 gebildet, in welchen in Stranglängsrichtung zueinander im Abstand angeordnete Öffnungen 16 eingebracht sind, die wie die Öffnungen 10 der Entlüftung und ggf. Entwässerung dienen.

Die Öffnungen 16 liegen am Fuße der beiden durch die Einbuchtung 12 gebildeten Umfangsabstufungen der Schlauchwand und damit in einem schwer einsehbaren Bereich. Zudem wird die Sicht in die Einbuchtung durch einen gegenüberliegenden Karosserieabschnitt 13 an einer Türeinfassung für eine Fahrzeugtür versperrt. Die verhältnismäßig geringe Wanddicke des Umfangsabschnitts 11 erleichtert das Einbringen der Öffnungen 16, die in dem gezeigten Ausführungsbeispiel durch Materialverdrängung gebildet sind.

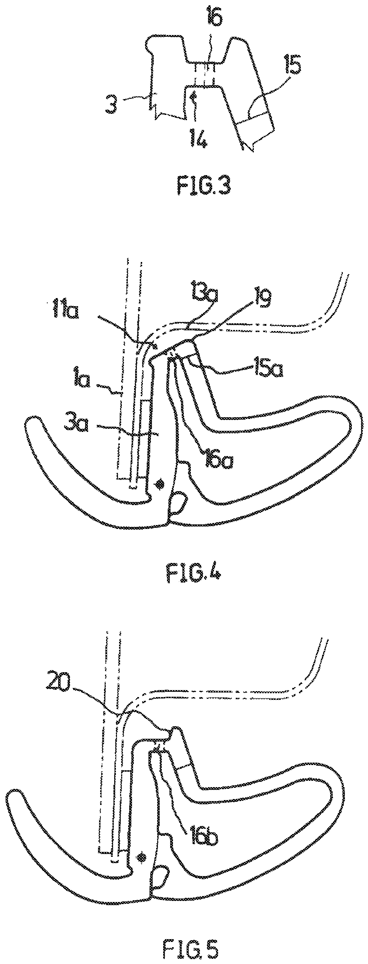

Bei einem in Fig. 4 gezeigten Ausführungsbeispiel für einen Dichtungsstrang geht ein Befestigungsschenkel 3a in eine Endabwinklung 11 a über, die bis zu einer Grenzfläche 15a aus dem gleichen härteren Elastomermaterial wie der Befestigungsschenkel 3a besteht und in der in Stranglängsrichtung zueinander im Abstand Öffnungen 16a gebildet sind. Im Unterschied zu der Endabwinklung 11 des vorausgehenden Ausführungsbeispiels weist die Endabwinklung 11a keine Einbuchtung auf. Eine in Umfangsrichtung in der Schlauchwand gebildete Abwinklung 19 sorgt dafür, dass der Bereich der Öffnungen 16a überwiegend uneinsehbar ist.

Weitgehend uneinsehbar ist auch der Bereich von Öffnungen 16b bei einem in Fig. 5 gezeigten Ausführungsbeispiel. Die Öffnungen 16b liegen am Fuß einer Abstufung 20.

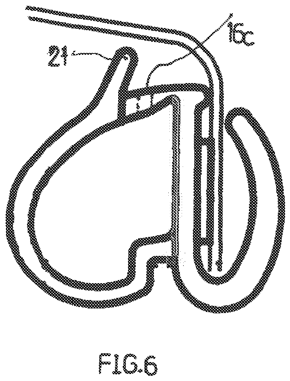

Bei einem in Fig. 6 gezeigten Ausführungsbeispiel bildet eine von der Schlauchwand vorstehende Lippe 21 eine Abstufung, die einen Bereich von am Fuß der Abstufung gebildeten Öffnungen 16c abdeckt.

## Patentansprüche

1. Dichtungsstrang, insbesondere zur Abdichtung einer Türeinfassung gegen eine Fahrzeugtür, mit einem aus einem ersten Elastomermaterial bestehenden Befestigungsabschnitt (2), der mit einem aus einem zweiten, gegenüber dem ersten weicheren, Elastomermaterial bestehenden Abschnitt (6) einen Dichtungsschlauch (7) bildet, dessen Schlauchwand zueinander in Stranglängsrichtung im Abstand angeordnete Öffnungen (16) aufweist, wobei alle diese Öffnungen (16) in Einbaulage verdeckt bei einer in Umfangsrichtung gebildeten Abwinklung (19) der Schlauchwand in einem an den Befestigungsabschnitt angrenzenden Umfangsabschnitt (14) des Dichtungsschlauches (7) angeordnet sind,
**dadurch gekennzeichnet,**
**dass** der die Öffnungen (16) aufweisende Umfangsabschnitt (14) des Dichtungsschlauches (7) aus dem ersten, den Befestigungsabschnitt (2) bildenden Elastomermaterial besteht.

2. Dichtungsstrang nach Anspruch 1,
**dadurch gekennzeichnet,**
**dass** die Öffnungen (16) an einer durch die Abwinklung gebildeten Abstufung (20) der Schlauchwand, insbesondere am Fuß der Abstufung, angeordnet sind.

3. Dichtungsstrang nach Anspruch 1 oder 2,
**dadurch gekennzeichnet,**
**dass** die Öffnungen (16) in einer Einbuchtung (12) in der Umfangsfläche des Dichtungsschlauchs (7) oder bei einer von der Umfangsfläche vorstehenden Lippe (21) gebildet sind.

4. Dichtungsstrang nach einem der Ansprüche 1 bis 3,
**dadurch gekennzeichnet,**
**dass** der Dichtungsstrang zur Anbringung an der Türeinfassung (20) vorgesehen ist.

5. Dichtungsstrang nach Anspruch 4,
**dadurch gekennzeichnet,**
**dass** die offene Seite der Einbuchtung (12) zur Anordnung gegenüber einem Karosserieabschnitt (13) der Türeinfassung vorgesehen ist.

6. Dichtungsstrang nach Anspruch 5,
**dadurch gekennzeichnet,**
**dass** die Öffnungen (16) bei einer Grenzfläche (15) zwischen dem ersten und zweiten Elastomermaterial angeordnet sind.

7. Dichtungsstrang nach einem der Ansprüche 1 bis 6,
**dadurch gekennzeichnet,**
**dass** die Schlauchwanddicke in dem die Öffnungen aufweisenden Umfangsabschnitt (14) des Dichtungsschlauchs (7) gegenüber den an den Umfangsabschnitt (14) angrenzenden Umfangsabschnitten verringert ist.

8. Dichtungsstrang nach einem der Ansprüche 1 bis 7,
**dadurch gekennzeichnet,**
**dass** der Befestigungsabschnitt (2) einen mit einem Karosserieflansch (1) zu verbindenden Befestigungsschenkel (3) aufweist, der einen Umfangsabschnitt der Schlauchwand des Dichtungsschlauchs (7) bildet.

9. Dichtungsstrang nach Anspruch 8,
**dadurch gekennzeichnet,**
**dass** die Öffnungen (16) in einer Endabwinklung (11) am Befestigungsschenkels (3) an dessen dem freien Ende des Karosserieflansches (1) fernen Ende gebildet sind.

10. Dichtungsstrang nach einem der Ansprüche 1 bis 8,
**dadurch gekennzeichnet,**
**dass** die Öffnungen (16) durch Verdrängung oder Abführung von Strangmaterial an bzw. aus dem unmittelbar aus einem Extrusionswerkzeug austretenden Dichtungsstrang gebildet sind.

11. Dichtungsstrang nach einem der Ansprüche 1 bis 10,
**dadurch gekennzeichnet,**
**dass** der Dichtungsstrang als überdurchschnittlich langer, zur Verarbeitung mittels Rollapplikation vorgesehenes Dichtungsprofil ausgebildet ist.

12. Dichtungsstrang nach Anspruch 11,
**dadurch gekennzeichnet,**
**dass** der Dichtungsstrang zur Aufwicklung auf eine Rolle vorgesehen ist.

## Claims

1. Sealing string, in particular for sealing a door frame with respect to a vehicle door, having a fastening portion (2) which consists of a first elastomer material and which, together with a portion (6) which consists of a second elastomer material which is softer than the first, forms a sealing tube (7) whose tube wall has openings (16) which are arranged at a distance from one another in the longitudinal direction of the string, wherein, in the installed position, all these openings (16) are arranged so as to be concealed at an angled portion (19), which is formed in the circumferential direction, of the tube wall in a circumferential portion (14) of the sealing tube (7) that adjoins the fastening portion,
**characterized**
**in that** the circumferential portion (14) of the sealing tube (7) that has the openings (16) consists of the first elastomer material forming the fastening portion (2).

2. Sealing string according to Claim 1,
**characterized**
**in that** the openings (16) are arranged on a stepped portion (20) of the tube wall that is formed by the angled portion, in particular on the foot of the stepped portion.

3. Sealing string according to Claim 1 or 2,
**characterized**
**in that** the openings (16) are formed in an indentation (12) in the circumferential surface of the sealing tube (7) or at a lip (21) projecting from the circumferential surface.

4. Sealing string according to one of Claims 1 to 3,
**characterized**
**in that** the sealing string is provided for mounting on the door frame (20).

5. Sealing string according to Claim 4,
**characterized**
**in that** the open side of the indentation (12) is provided for arrangement opposite a vehicle body portion (13) of the door frame.

6. Sealing string according to Claim 5,
**characterized**
**in that** the openings (16) are arranged at an interface (15) between the first and second elastomer material.

7. Sealing string according to one of Claims 1 to 6,
**characterized**
**in that** the tube wall thickness in the circumferential portion (14) of the sealing tube (7) that has the openings is reduced by comparison with the circumferential portions adjoining the circumferential portion (14).

8. Sealing string according to one of Claims 1 to 7,
**characterized**
**in that** the fastening portion (2) has a fastening leg (3) which is to be connected to a vehicle body flange (1) and which forms a circumferential portion of the tube wall of the sealing tube (7).

9. Sealing string according to Claim 8,
**characterized**
**in that** the openings (16) are formed in an angled end portion (11) on the fastening leg (3) at its end remote from the free end of the vehicle body flange (1).

10. Sealing string according to one of Claims 1 to 8,
**characterized**
**in that** the openings (16) are formed by displacing or removing string material on or from the sealing string directly emerging from an extrusion die.

11. Sealing string according to one of Claims 1 to 10,
**characterized**
**in that** the sealing string is designed as an over-averagely long sealing profile which is provided for processing by means of roll application.

12. Sealing string according to Claim 11,
**characterized**
**in that** the sealing string is provided for winding up onto a roll.

## Revendications

1. Garniture de joint, en particulier pour étanchéifier un encadrement de porte par rapport à une porte de véhicule, présentant une section de fixation (2), constituée par un premier matériau élastomère, qui forme un flexible d'étanchéité (7) avec une deuxième section (6), constituée par un deuxième matériau élastomère plus souple que le premier matériau élastomère, la paroi de flexible présentant des ouvertures (16) disposées à une certaine distance les unes des autres dans la direction longitudinale de la garniture, toutes ces ouvertures (16) étant disposées, dans la position de montage, dans une section périphérique (14) du flexible d'étanchéité (7) adjacente à la section de fixation de manière être cachées dans un coude (19) formé dans le sens périphérique de la paroi de flexible, **caractérisée en ce que** la section périphérique (14) du flexible d'étanchéité (7) présentant les ouvertures (16) est constituée par le premier matériau élastomère formant la section de fixation (2).

2. Garniture d'étanchéité selon la revendication 1, **caractérisée en ce que** les ouvertures (16) sont disposées au niveau d'un épaulement (20) de la paroi de flexible, formé par le coude, en particulier au niveau du pied de l'épaulement.

3. Garniture d'étanchéité selon la revendication 1 ou 2, **caractérisée en ce que** les ouvertures (16) sont formées dans un creux (12) dans la surface périphérique du flexible d'étanchéité (7) ou au niveau d'une lèvre (21) faisant saillie par rapport à la surface périphérique.

4. Garniture d'étanchéité selon l'une quelconque des revendications 1 à 3, **caractérisée en ce que** la garniture d'étanchéité est destinée à être placée au niveau de l'encadrement de porte (20).

5. Garniture d'étanchéité selon la revendication 4, **caractérisée en ce que** le côté ouvert du creux (12) est destiné à être disposé face à une section de carrosserie (13) de l'encadrement de porte.

6. Garniture d'étanchéité selon la revendication 5, **caractérisée en ce que** les ouvertures (16) sont disposées au niveau d'une interface (15) entre le premier et le deuxième matériau élastomère.

7. Garniture d'étanchéité selon l'une quelconque des revendications 1 à 6, **caractérisée en ce que** l'épaisseur de paroi du flexible dans la section périphérique (14), présentant les ouvertures, du flexible d'étanchéité (7) est diminuée par rapport aux sections périphériques adjacentes à la section périphérique (14).

8. Garniture d'étanchéité selon l'une quelconque des revendications 1 à 7, **caractérisée en ce que** la section de fixation (2) présente une branche de fixation (3) qui forme une section périphérique de la paroi du flexible d'étanchéité (7) et qui est à relier à une bride de carrosserie (1).

9. Garniture d'étanchéité selon la revendication 8, **caractérisée en ce que** les ouvertures (16) sont formées dans un coude d'extrémité (11) au niveau de la branche de fixation (3) au niveau de son extrémité éloignée de l'extrémité libre de la bride de carrosserie (1).

10. Garniture d'étanchéité selon l'une quelconque des revendications 1 à 8, **caractérisée en ce que** les ouvertures (16) sont formées par refoulement de matériau de garniture au niveau de ou par évacuation de matériau de garniture à partir de la garniture d'étanchéité sortant directement d'un outil d'extrusion.

11. Garniture d'étanchéité selon l'une quelconque des revendications 1 à 10, **caractérisée en ce que** la garniture d'étanchéité est conçue sous forme d'un profilé d'étanchéité présentant une longueur supérieure à la moyenne, destiné à être mis en oeuvre au moyen d'une application à partir d'un rouleau.

12. Garniture d'étanchéité selon la revendication 11, **caractérisée en ce que** la garniture d'étanchéité est destinée à être enroulée sur un rouleau.
